Europäisches Patentamt

European Patent Office

Office européen des brevets

(11) Publication number: **0 320 520 B1**

(12) **EUROPEAN PATENT SPECIFICATION**

(45) Date of publication of patent specification: **10.06.92**

(51) Int. Cl.5: **G11B 21/02**, G11B 5/55, G11B 7/08

(21) Application number: **87118546.8**

(22) Date of filing: **15.12.87**

(54) **A disk data storage file.**

(43) Date of publication of application:
**21.06.89 Bulletin 89/25**

(45) Publication of the grant of the patent:
**10.06.92 Bulletin 92/24**

(84) Designated Contracting States:
**DE FR GB**

(56) References cited:
**EP-A- 0 113 008**
**DE-A- 3 424 029**
**GB-A- 2 179 421**
**US-A- 4 263 632**

**IBM TECHNICAL DISCLOSURE BULLETIN, vol. 27, no. 7A, December 1984, pages 3920-3921, New York, US; R.J. NAGEM et al.: "Method to reduce track misregistration on dual actuator dasd"**

(73) Proprietor: **International Business Machines Corporation**
**Old Orchard Road**
**Armonk, N.Y. 10504(US)**

(72) Inventor: **Chong, Darryl George**
**4430 Calle de Farrar**
**San Jose California 95118(US)**
Inventor: **Furman, Burford John**
**842 Los Robles Avenue**
**Palo Alto California 94306(US)**
Inventor: **Mathurin, Edward Landais**
**16799 Potter Court**
**Los Gatos California 95030(US)**
Inventor: **Rajac, Thomas John**
**7350 Orchard Drive**
**Gilroy California 95020(US)**

(74) Representative: **Moss, Robert Douglas**
**IBM United Kingdom Limited Intellectual Property Department Hursley Park**
**Winchester Hampshire SO21 2JN(GB)**

EP 0 320 520 B1

Rank Xerox (UK) Business Services

## Description

This invention relates to a disk data storage file.

For a considerable number of years, electronic data processing and computing systems have included disk files in which extremely large amounts of data can be written on or read from one or more rotatable disks of a suitable data receiving medium, by means of electro-magnetic read-write heads moved over the surface of the disk or, much more recently, by means of optical read-write heads similarly moved relative to the disks. In either case, the extremely high density of the information stored on a disk has required that the read-write heads be moved and positioned with great accuracy relative to the disk to ensure that data can be precisely read from or written on the disk.

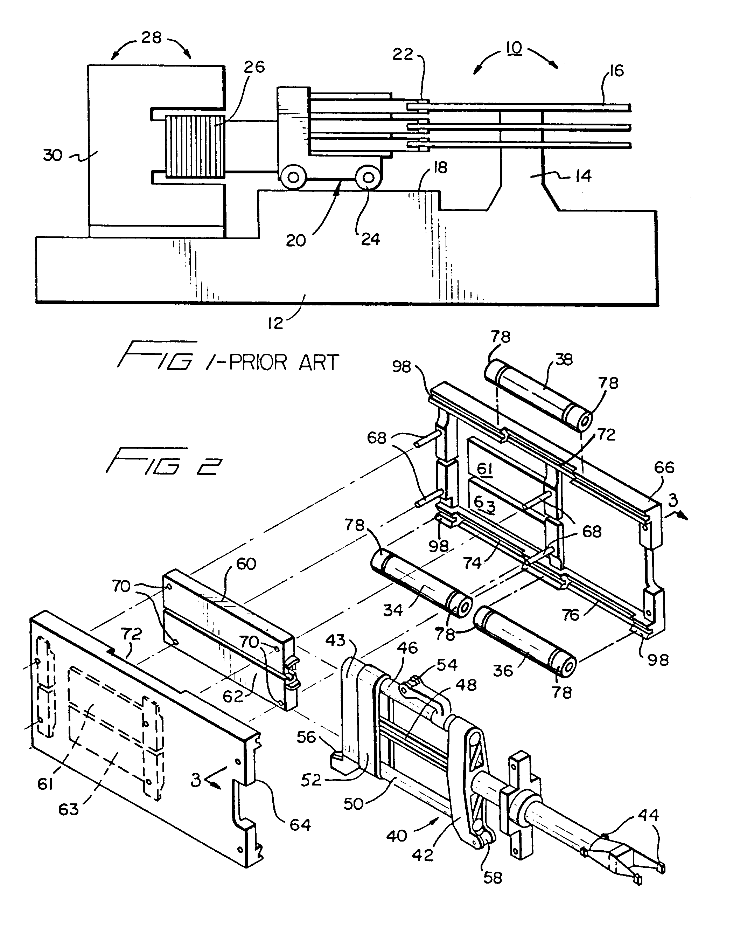

Figure 1 of the drawings accompanying this description illustrates schematically such a known disk file 10. A frame or base 12 supports a rotatable spindle 14 on which one or more data storage disks 16 are supported to be rotated with the spindle by a suitable drive motor (not shown). A guide track 18 is provided on the frame 12 to support a carriage 20 from which one or more suitable read-write heads 22 extend. When carriage 20 is moved back and forth on rollers 24 engaged with guide track 18, heads 22 move radially inwards and outwards along the surfaces of disks 16 to permit reading and writing of information. Attached to carriage 20 is an electrically conductive coil 26 which is included in a linear drive motor 28 such as a voice coil motor, the motor having an electro-magnetic core 30 whose field interacts with that of the coil 26 when the coil is electrically energized, thereby causing the carriage 20 to move back and forth as required to properly position heads 22 relative to disks 16. Collectively, carriage 20, guide track 18 and linear motor 28 are often referred to as a disk file actuator. U.S -A- 4,393,425 and EP-A-0,113,008 disclose actuators of this general type.

A relatively common difficulty with disk file actuators of this type is that when coil 26 is energized by passing electrical current therethrough, not only does the interaction of magnetic fields cause carriage 20 to move in the desired direction along track 18; but also, an equal and opposite reaction force arises within the core 30. This force, if transmitted at the appropriate frequency through the frame 12, can cause vibration between read-write heads 22 and disks 16, thereby degrading the ability of the apparatus to accurately position the read-write heads, or causing the heads to fail to read or write data, or both.

The existence of such unwanted vibration between the read-write heads and the disks has been noted for many years. A variety of structural modifications have been proposed for isolating the read-write heads and the disks from adverse affects of the reaction forces generated in the magnets of the linear motor. In general, some sort of resilient mounting has been provided for the linear motor so that the reaction forces generated in the motor are isolated from the frame of the disk file, thereby minimising the generation of unwanted vibration between the read-write heads and the disks. For example, in disk file actuators embodying a hollow cylindrical magnet within which a carriage having an electrical coil is caused to translate, it has been suggested to mount the cylindrical magnet at either end using annular, resilient flexures which extend between the magnet and the frame of the disk file.

In U.S. -A- 4,144,466, vibrations of the moving coil of a disk actuator are isolated from the read-write heads by securing the coil to the support structure for the heads using an annular layer of elastomeric material. Due to the presence of this layer of elastomeric material, longitudinal resonances and vibrations are significantly damped. In U.S. -A- 4,216,505, a somewhat different problem is addressed in that vibrations of a magnetic transducer head are directly isolated by connecting the support for the transducer head to a surrounding housing by means of a visco-elastic layer extending between the support and the housing. In U.S. -A- 4,389,688 and U.S -A-4,408,238, structures are disclosed for supporting a read-write head in such a manner as to damp out various vibrations. In an article entitled "High-Capacity Disc Drive Servomechanism Design" published by Stephen A. Edwards in the January 1984 issue of the Hewlett-Packard Journal at pages 23-27, a technique for isolating read-write heads from reaction forces is disclosed in which the linear motor is mounted on the base of the disk file by means of a shock mount comprising a vulcanized sandwich of two aluminium plates with a specially formulated butyl rubber bonded between the plates.

While such prior art attempts to reduce vibration in disk files have achieved a certain measure of success, continued advances in the design of smaller more compact disk files and disk actuators have created a continuing need for simple, compact, reliable and inexpensive devices for isolating the read-write heads and the disks from vibration arising from reaction forces generated in the motor of the disk actuator.

The present invention seeks to provide an improved disk file actuator in which the read-write heads and disks of the disk file are isolated from vibrations caused by reaction forces in the drive motor of the disk file actuator.

A disk data storage file including a frame, a transducer-carrying carriage, at least two guide rails rigidly mounted on the frame, an electrically conductive coil mounted on the carriage and a magnet-supporting structure so disposed that upon electrical energization of the coil the carriage is moved along the guide rails by electromagnetic interaction, is characterised, according to the invention, by the magnet-supporting structure being secured to the guide rails by resilient means in order to substantially isolate the guide rails and the frame from the reaction forces produced on the magnet-supporting structure when the coil is energized.

How the invention can be carried out will now be described by way of example, with reference to Figures 2 to 8 of the accompanying drawings, in which:-

Figure 2 is an exploded, perspective view of part of a disk file embodying the invention;

Figure 3 is a sectioned, elevation of the assembled apparatus of Figure 2, taken along line 3-3 of Figures 2 and 4;

Figure 4 is a view on line 4-4 of Figure 3 with the magnets and carriage removed for purposes of illustration;

Figure 5 and 6 show elevations, partially in section, of the combined support rail and resilient mounting bushing in accordance with the invention;

Figure 7 shows a fragmentary view taken along line 7-7 of Figure 3, indicating the co-operation between the resilient bushings and the side plates of the assembled apparatus; and

Figure 8 is a partial view of the forward end of the assembly of Figures 2, 3 and 4, with the addition of a flexure element for mechanical stability.

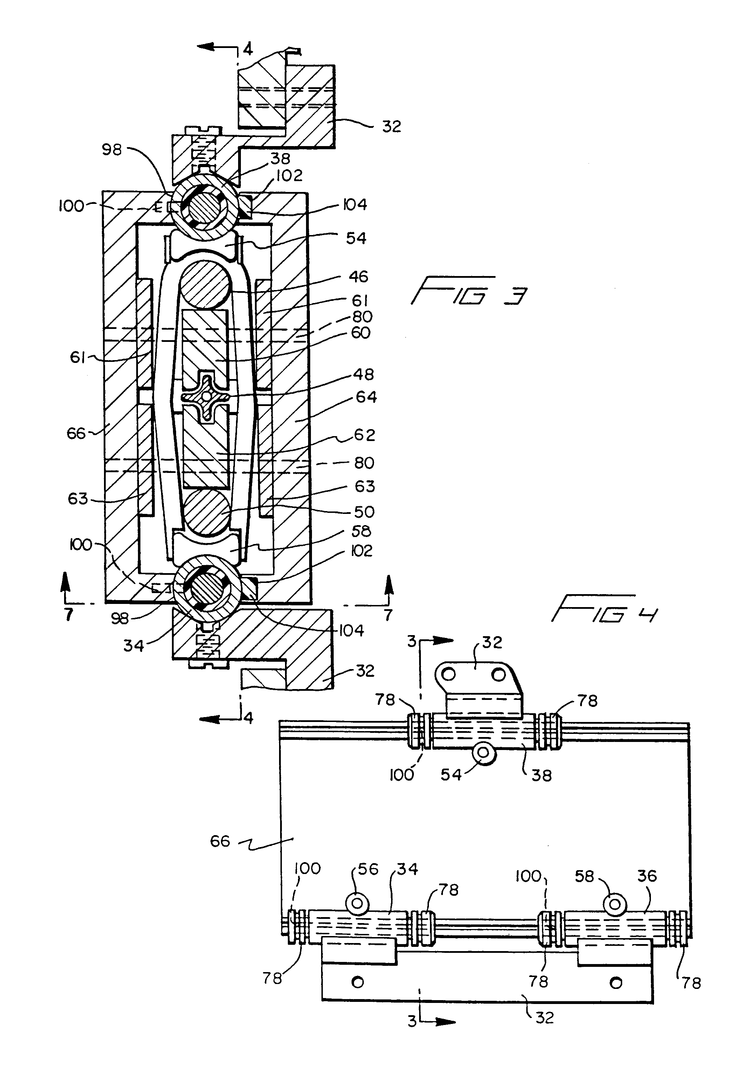

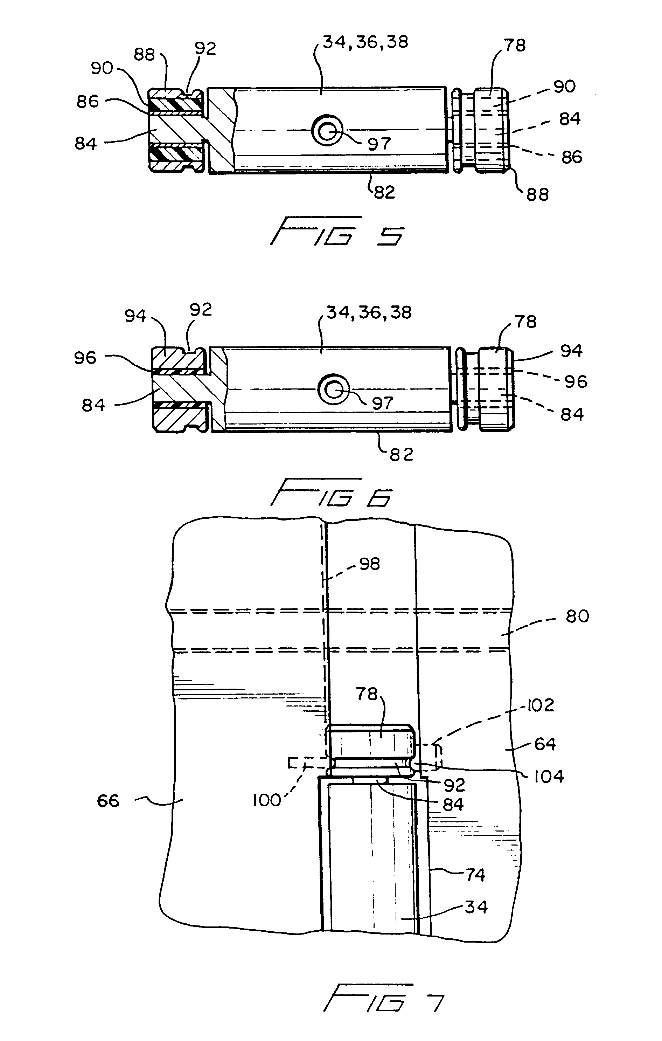

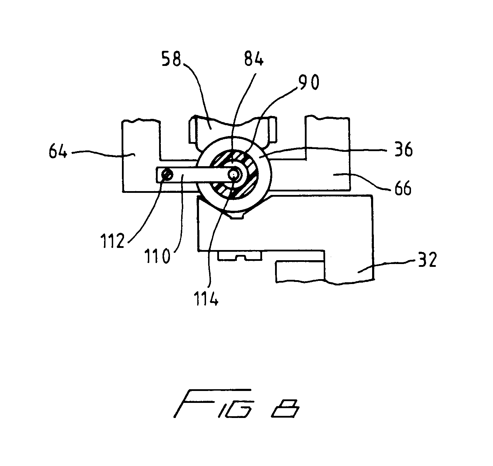

With reference to Figures 2, 3 and 4, an actuator assembly is supported by a frame 32, shown fragmentarily in Figures 3 and 4, which typically would be attached to the enclosure for the complete disk file. Frame 32 is attached at spaced locations to a pair of axially separated lower support rail assemblies 34, 36 and a single upper support rail assembly 38. Though the terms "upper" and "lower" are used in this description to refer to the relative positions of various components as shown in the drawings, the illustrated disk file actuator can be used in orientations where the same components may be more or less side by side rather than one above the other as illustrated. A carriage 40 is supported between support rail assemblies 34,36 and 38 for movement back and forth thereon. Carriage 40 comprises a forward body portion 42 and a rear body portion 43. Body portion 42 supports one or more magnetic or optical read-write heads 44. Extending between forward body portion 42 and rear body portion 43 are three spaced, elongate struts 46, 48, 50. An electrically conductive coil 52 is mounted near the rear ends of these struts. The uppermost strut 46 supports an upwardly extending, centrally located support roller 54 which contacts upper support rail assembly 38, as shown most clearly in Figures 3 and 4. The forward and rear body portions respectively support downwardly extending support rollers 58,56 which contact lower support rail assemblies 36, 34.

In the assembled apparatus, as seen in Figure 3, a pair of elongate, rectangular bar-shaped pole pieces 60, 62 are positioned between struts 46, 48 and 48, 50 respectively. Pairs of magnets 61, 63 are provided outside carriage 40 on both sides of pole pieces 60, 62. Magnets 61, 63 may be permanent or electromagnetic and are positioned so that their fields will interact with that generated by coil 52 when the coil is electrically energized. Magnets 61, 63 are attached to and are positioned by a pair of side plates 64, 66, each of which has suitable sets of pins 68 which engage corresponding sockets 70 in pole pieces 60, 62 after the pole pieces have been inserted between the struts 46-50.

Along their axially extending upper and lower edges, side plates 64,66 include upper, central relief notches 72 and lower, axially spaced relief notches 74, 76. In the assembled apparatus, notches 72, 74 and 76 provide clearance between side plates 64, 66 and the central portions of support rail assemblies 34-38 on which rollers 54-58 ride. However, adjacent to relief notches 72-76, side plates 64,66 firmly engage resilient end bushings 78 provided at the opposite ends of the support rails, as will be discussed with regard to Figures 3-7. Side plates 64, 66 are clamped to and resiliently supported by bushings 78 by means of suitable fasteners 80, shown schematically in phantom in Figures 3 and 7. As a result of the resilient support of side plates 64,66 on bushings 78, the axially directed reaction forces arising in magnets 61, 63 are attenuated effectively so that substantially no vibrations are transmitted to frame 32. As used in this description, the term "axial" refers to movements or forces generally parallel to the path or axis of movement of carriage 40.

As seen in Figures 5 and 6, each of the support rail assemblies 34-38 comprises an essentially right circular cylindrical central portion 82 having a pair of oppositely, axially extending end portions 84 on which resilient bushings 78 are mounted. In the preferred embodiment illustrated in Figure 5, resilient bushings 78 comprise an inner metal sleeve 86 sized to be press fitted onto end portions 84, an outer metal sleeve 88 spaced radially from inner sleeve 86 and a layer 90 of elastomeric material extending between and attached to sleeves 86,88 by bonding or adhesive or friction. Bonding is preferred, however. Outer sleeve 88 also comprises a circumferentially extending groove 92 whose purpose will be explained subsequently. Alternatively, as shown in Figure 6, resilient bushing 78 may comprise an outer sleeve 94 spaced radially from end portions 84 and a layer 96 of elastomeric material extending between and attached to end portion 84 and sleeve 94 by bonding or adhesive or friction. However, this latter embodiment is somewhat more difficult to manufacture than that of Figure 5. In both embodiments, a tapped hole 97 is provided at the centre of central portion 82 for the purpose of attaching the rail assembly to frame 32, as indicated schematically in Figure 3.

As shown in Figures 2, 3 and 7, side plate 66 comprises on either side of its relief notches 72-76 an axially extending groove 98 in which the resilient bushings 78 are cradled in the assembled device. Within groove 98 adjacent to at least one resilient bushing 78 in each of rail assemblies 34-38 is an outwardly extending pin 100 which extends into the circumferentially extending groove 92 of the adjacent resilient bushing 78. These pins ensure proper location of side plates 64, 66 on bushings 78. On the other side of the resilient bushings 78, side plate 64 is provided with a small socket 102 in which an elastomeric pad 104 is positioned to bear on bushing 78 opposite to pin 100. Pins 100 axially position side plates 64,66 relative to resilient bushings 78, while pads 104 are provided to allow for adverse tolerance stack-ups which might prevent side plates 64, 66 from firmly engaging resilient bushings 78. The clamping force exerted by fasteners 80 on side plates 64,66 and on bushings 78 ensures that any axial movement of side plates 64,66 is transmitted directly to the resilient bushings.

In the preferred embodiment of the rail assembly shown in Figure 5, all parts other than layer 90 were made from stainless steel. The compliance of the elastomeric material was chosen to allow side plates 64, 66 to vibrate axially, without transmitting significant vibration to rail assemblies 34, 36, 38. The dimensions of the parts can be adjusted as needed to avoid transmitting vibrations at a frequency which would be especially harmful to proper operation of the disk file. Those skilled in the art will understand, of course, that the dimensions and materials of the rail assembly may be varied as necessary to meet the load carrying capacity and vibration damping requirements of a given disk file actuator.

In certain instances, it may be desirable to provide flexure elements which are directly connected to the end portions of the guide rails and to the magnet positioning means. Referring now to Figure 8, there is illustrated such an addition to the assembly. A typical flexure element 110, which is preferably a thin stainless steel strip, has an opening at one end and is secured to side plate 64 by means of machine screw 112. The flexure element 110 is secured to the end portion 84 of guide rail 36 by means of machine screw 114 which is threaded into an axially threaded bore in the centre of end portion 84. The flexure element 110 shown in Figure 8 is representative of a typical flexure element for each corresponding guide rail. In the preferred embodiment each of the guide rails 34, 36, 38 has a similar flexure element interconnecting one of its respective end portions with an associated side plate. The flexure elements provide mechanical stability between side plates 64, 66 and guide rails 34, 36, 38 to substantially prevent movement relative to one another in a direction perpendicular to the access direction of the actuator. The flexure elements are thin strips of material so as to permit slight axial movement between the central portions of the guide rails 34, 36, and 38 and the side plates 64, 66. In this manner, the flexure elements assist the elastomeric material in returning the magnet structure to its proper axial position relative to the guide rails following actuation of the actuator.

## Claims

1. A disk data storage file including a frame (32), a transducer-carrying carriage (40), at least two guide rails (34, 36, 38) rigidly mounted on the frame, an electrically conductive coil (52) mounted on the carriage and a magnet-supporting structure (61, 63, 64, 66) so disposed that upon electrical energization of the coil the carriage is moved along the guide rails by electromagnetic interaction, the file being characterised by the magnet-supporting structure (61, 63, 64, 66) being secured to the guide rails by resilient means (78, 90, 96) in order to substantially isolate the guide rails and the frame from the reaction forces produced on the magnet-supporting structure when the coil is energized.

2. A file as claimed in Claim 1, wherein the carriage (40) is supported on the guide rails (34, 36, 38) by a plurality of rollers (54, 56, 58) mounted on the carriage.

3. A file as claimed in claim 1 or claim 2, in which each of the guide rails (34, 36, 38) comprises an elongate central portion (82) rigidly mounted on the frame (32) and end portions (84) to which the resilient means (78, 90, 96) are attached.

4. A file as claimed in Claim 3, wherein each of the resilient means (78, 90, 96) comprises a bushing (78) surrounding an end portion (84) of its associated guide rail and elastomeric material (90) sandwiched between the end portion (84) of the guide rail (34, 36, 38) and the bushing (78).

5. A file as claimed in Claim 3, wherein each of the resilient means (78, 90, 96) comprises an inner bushing (86) surrounding and engaging an end portion (84) of its associated guide rail (34, 36, 38), an outer bushing (78) surrounding and spaced radially from the inner bushing (86) and elastomeric material (96) sandwiched between the inner and outer bushings.

6. A file as claimed in Claim 4 or Claim 5, wherein the magnet supportting structure (61, 63, 64, 66) comprises a pair of plate members (64, 66) disposed on either side of said carriage (40) and clamped in engagement with the bushings (78).

7. A file as claimed in Claim 6, wherein the plate members (64, 66) are engaged with the bushings (78) by a circumferentially extending groove (92) in at least one of the bushings (78), at least one pin (100) in at least one of the plate members (64, 66) extending into the groove (92) and means (80) for clamping the plate members to the bushings.

8. A file as claimed in Claim 7, wherein an elastomeric pad (104) is located in the other of the plate members (64, 66) opposite said at least one pin (100).

9. A file as claimed in any of claims 3 to 8, further comprising a plurality of flexure elements (110), each flexure element having one end directly attached to one end portion of a respective guide rail (34, 36, 38) and its other end directly attached to the magnet-supporting structure (61, 63, 64, 66).

**Revendications**

1. Pile de disques pour enregistrement de données comprenant un châssis (32), un chariot porteur de transducteur (40), au moins deux rails de guidage (34, 36, 38) montés de façon rigide sur le châssis, une bobine électriquement conductrice (52) montée sur le chariot et une structure support d'aimants (61, 63, 64, 66) disposés de sorte que, lors de l'excitation de la bobine, le chariot se déplace le long des rails de guidage par interaction électromagnétique, la pile étant caractérisée par la structure support d'aimants (61, 63, 64, 66) qui est fixée aux rails de guidage par des moyens résilients (78, 90, 96) de manière à rigoureusement isoler les rails de guidage et le châssis des forces de réaction produites sur la structure support d'aimants lorsque la bobine est excitée.

2. pile selon la revendication 1, dans laquelle le chariot (40) est porté sur les rails de guidage (34, 36, 38) par une pluralité de galets (54, 56, 58) montés sur le chariot.

3. Pile selon les revendications 1 ou 2, dans laquelle chacun des rails de guidage (34, 36, 38) comporte une portion centrale allongée (82) montée de façon rigide sur le châssis (32) et des portions extrêmes (84) auxquelles sont attachés les moyens résilients (78, 90, 96).

4. Pile selon la revendication 3, dans laquelle chacun des moyens résilients (78, 90, 96) comporte un manchon (78) entourant une portion extrême (84) de son rail de guidage associé et un matériau élastomère (90) pris entre la portion extrême (84) du rail de guidage (34, 36, 38) et le manchon (78).

5. Pile selon la revendication 3, dans laquelle chacun des moyens résilients (78, 90, 96) comporte un manchon interne (86) entourant une portion extrême (84), à laquelle il vient s'engager, de son rail de guidage associé (34, 36, 38), un manchon externe (78) entourant le manchon interne 86 duquel il est espacé radialement, et un matériau élastomère (96) pris entre les manchons interne et externe.

6. Pile selon les revendications 4 ou 5, dans laquelle la structure support d'aimants (61, 63, 64, 66) comporte une paire d'éléments plats (64, 66) disposés de chaque côté dudit chariot (40) et verrouillés par engagement avec les manchons (78).

7. Pile selon la revendication 6, dans laquelle les éléments plats (64, 66) sont engagés avec les manchons (78) par un sillon circulaire (92) fait dans au moins un des manchons (78), au moins une broche (100) dans au moins un des éléments plats (64, 66) se prolongeant dans le sillon (92) et les moyens 80 pour verrouiller les éléments plats avec les manchons.

8. Pile selon la revendication 7, dans laquelle une patte élastomère (104) est placée dans l'autre des éléments plats (64, 66) opposée à ladite au moins une broche (100).

9. Pile selon l'une quelconque des revendications 3 à 8, comprenant en outre une pluralité d'éléments de courbure (110), chaque éléments de courbure ayant une extrémité directement attachée à une portion extrême d'un rail de guidage respectif (34, 36, 38), et son autre extrémité, directement attachée à la structure support d'aimants (61, 63, 64, 66).

**Patentansprüche**

1. Plattenspeicher zur Datenspeicherung, mit einem Rahmen (32), mit einem wandlertragenden Wagen (40), mit zumindest zwei Führungsschienen (34, 36, 38), die starr an dem Rahmen montiert sind, mit einer elektrisch leitenden, auf dem Wagen montierten Spule (52) und mit einer magnettragenden Einheit (61, 63, 64, 66), die so angeordnet ist, daß der Wagen bei elektrischer Erregung der Spule auf Grund elektromagnetischer Wechselwirkung längs der Führungsschienen bewegt wird, wobei der Speicher dadurch gekennzeichnet ist, daß die magnettragende Einheit (61, 63, 64, 66) auf den Führungsschienen mittels elastischer Mittel (78, 90, 96) befestigt ist, um die Führungsschienen und den Rahmen von den Reaktionskräften im wesentlichen zu isolieren, welche bei Erregung der Spule auf die magnettragende Einheit entwickelt werden.

2. Speicher nach Anspruch 1, bei welchem der Wagen (40) mittels einer Mehrzahl von auf dem Wagen gelagerten Rollen (54, 56, 58) auf den Führungsschienen (34, 36, 38) abgestützt ist.

3. Speicher nach Anspruch 1 oder 2, bei welchem jede der Führungsschienen (34, 36, 38) einen starr an dem Rahmen (32) montierten länglichen Mittelabschnitt (82) und Endabschnitte (84), um welche die elastischen Mittel (78, 90, 96) angebracht sind, aufweist.

4. Speicher nach Anspruch 3, bei welchem jedes der elastischen Mittel (78, 90, 96) eine Büchse (78) besitzt, welche den Endabschnitt (84) der ihm zugeordneten Führungsschiene umgibt, wobei elastomeres Material (90) sandwichartig zwischen dem Endabschnitt (84) der Führungsschiene (34, 36, 38) und der Büchse (78) angeordnet ist.

5. Speicher nach Anspruch 3, bei welchem jedes der elastischen Mittel (78, 90, 96) eine innere Büchse (86) besitzt, welche den Endabschnitt (84) der ihm zugeordneten Führungsschiene (34, 36, 38) umgibt und erfaßt, eine äußere Büchse (78) die innere Büchse (86) umgibt und von ihr in radialem Abstand liegt und zwischen der inneren und der äußeren Büchse elastomeres Material (96) sandwichartig angeordnet ist.

6. Speicher nach Anspruch 4 oder 5, bei welchem die magnettragende Einheit (61, 63, 64, 66) ein Paar von Plattenteilen (64, 66) besitzt, die zu beiden Seiten des Wagens (40) angeordnet und in Eingriff mit den Büchsen (78) zusammengespannt sind.

7. Speicher nach Anspruch 6, bei welchem die Plattenteile (64, 66) solcherweise an den Büchsen (78) angreifen, daß in zumindest einer der Büchsen (78) eine rundherum verlaufende Rille (92), zumindest ein sich in die Rille (92) erstreckenden Stift (100), Plattenteile (64, 66) sowie Mittel (80) zum Spannen der Plattenteile gegen die Büchsen vorgesehen sind.

8. Speicher nach Anspruch 7, bei welchem in dem anderen der Plattenteile (64, 66), gegenüber dem zumindest einen Stift (100) ein elastomerer Polster (104) gelegen ist.

9. Speicher nach irgend einem der Ansprüche 3 bis 8, welcher weiters eine Mehrzahl von Biegeelementen (110) besitzt, wobei jedes Biegeelement mit einem Ende unmittelbar an einem Endabschnitt einer entsprechenden Führungsschiene (34, 36, 38) und mit seinem anderen Ende unmittelbar an der magnettragenden Einheit (61, 63, 64, 66) befestigt ist.

FIG 1-PRIOR ART

FIG 2

FIG 3

FIG 4

*FIG 5*

*FIG 6*

*FIG 7*

FIG 8